# DEMANDE DE BREVET EUROPEEN

(11) **EP 2 299 205 A1**
(43) Date de publication de la demande: **23.03.2011**
(21) Numéro de dépôt: 10177429.7
(22) Date de dépôt: 17.09.2010
(51) Int. Cl.: F25B 5/04, F25B 41/06, F25B 47/02, B60H 1/32

(54) **Dispositif de conditionnement d'air pour une installation de chauffage, ventilation et/ou climatisation**

(30) Priorité: 22.09.2009 FR 0904514
(71) Demandeur: Valeo Systèmes Thermiques, 78321 Le Mesnil Saint Denis Cedex (FR)
(72) Inventeur: Haller, Regine, 78490, Boissy sans Avoir (FR); Yahia, Mohamed, 75005, Paris (FR); Guitari, Imed, 78990, Elancourt (FR)

(57) **Abrégé**

La présente invention a pour objet une boucle de climatisation (12) pour une installation de chauffage, ventilation et /ou climatisation, notamment d'un habitacle de véhicule automobile, comportant au moins, selon le sens de circulation en circuit fermé d'un fluide réfrigérant, un compresseur (14), un premier échangeur de chaleur (16), apte à réchauffer un flux d'air destiné à être distribué dans l'habitacle, un premier organe de détente (18), un échangeur de chaleur extérieur (20) et un deuxième échangeur de chaleur (24). La boucle de climatisation (12) comporte un dispositif de stockage (28) relié à la sortie du premier échangeur de chaleur (16) et à la sortie de l'échangeur de chaleur extérieur (20).

## Description

L'invention concerne une boucle de climatisation pour une installation de chauffage, ventilation et/ou climatisation.

Un véhicule automobile est couramment équipé d'une installation de chauffage, ventilation et/ou climatisation pour modifier les paramètres aérothermiques d'un flux d'air diffusé à l'intérieur de l'habitacle du véhicule.

L'installation de chauffage, ventilation et/ou climatisation comprend également une boucle de climatisation à l'intérieur de laquelle circule un fluide réfrigérant. Le fluide réfrigérant est, par exemple, un hydrofluorocarbure, en particulier le fluide connu sous la dénomination R134a, ou un composé à base d'hydrofluoro-oléfine, notamment le fluide connu sous la dénomination HFO1234yf. La présente invention trouve également une application avec tous fluides réfrigérants analogues à ceux précédemment cités. La présente invention trouve également une application avec les fluides sur-critiques, notamment le dioxyde de carbone.

La boucle de climatisation comprend notamment un échangeur de chaleur extérieur, notamment placé à l'avant du véhicule, pour échanger de la chaleur avec un flux d'air extérieur au véhicule. L'échangeur de chaleur extérieur est traversé par le flux d'air extérieur mais n'est pas en contact avec le flux d'air destiné à être diffusé dans l'habitacle du véhicule.

L'échangeur de chaleur extérieur est un dispositif d'échange de chaleur prélevant de la chaleur sur le flux d'air extérieur qui le traverse. Toutefois, une dégradation de l'efficacité de l'échangeur de chaleur extérieur est notamment due à la création de givre sur les intercalaires agencés dans le passage du flux d'air à la traversée de l'échangeur de chaleur extérieur. Le givrage peut apparaître quand la vapeur d'eau, présente dans le flux d'air ambiant environnant et traversant l'échangeur de chaleur extérieur, se condense sur les surfaces extérieures de l'échangeur de chaleur extérieur et gèle. Si une légère apparition de givre n'est pas préjudiciable aux échanges de chaleur au niveau de l'échangeur de chaleur extérieur, par contre, une accumulation de givre est particulièrement néfaste et peut conduire au blocage complet du passage du flux d'air extérieur à travers l'échangeur de chaleur extérieur. Un tel givrage induit une perte de performance de la boucle de climatisation.

Il en résulte que les boucles de climatisation doivent être munies, de manière quasi-systématique, d'un système efficace de dégivrage de l'échangeur de chaleur extérieur. Pour résoudre le problème de dégivrage, un certain nombre de solutions ont été proposées.

Un premier procédé bien connu est celui fonctionnant « par inversion du cycle thermodynamique ». En cas de nécessité de dégivrage, on intervertit le rôle l'échangeur de chaleur extérieur, celui fonctionnant en tant que condenseur ou refroidisseur de gaz, la chaleur dégagée pendant la phase de dégivrage au niveau de l'échangeur de chaleur extérieur permettant de faire fondre le givre.

Un second procédé est celui fonctionnant « par dérivation de gaz chauds ». Lorsque le besoin de dégivrage est détecté, l'ouverture d'une vanne de dérivation permet au compresseur de débiter directement le fluide réfrigérant, notamment sous forme de gaz « chauds », dans l'échangeur de chaleur extérieur, une partie de la boucle de climatisation étant by-passée. Les avantages de ce procédé résident dans une certaine simplicité de réalisation au niveau de la boucle de climatisation, l'absence de prélèvement de chaleur à la source chaude et, au total, un assez faible coût énergétique.

Cependant, un tel procédé ne procure qu'une faible puissance de dégivrage pouvant aller jusqu'à l'inefficacité, dans certaines configurations, de la boucle de climatisation. Le document US 2007/0137228 divulgue un tel système et prévoit une boucle de climatisation apte à dégivrer à une température ambiante faible. Cependant, l'inconvénient du dispositif décrit dans ce document est une perte de la capacité de chauffage pendant le dégivrage.

Un but de l'invention est donc de remédier aux inconvénients précités. Elle propose ainsi une boucle de climatisation pour une installation de chauffage, ventilation et/ou climatisation. Plus précisément, l'invention se rapporte à une boucle de climatisation pour une installation de chauffage, ventilation et /ou climatisation, notamment d'un habitacle de véhicule automobile, comportant au moins, selon le sens de circulation en circuit fermé d'un fluide réfrigérant, un compresseur, un premier échangeur de chaleur, apte à réchauffer un flux d'air destiné à être distribué dans l'habitacle, un premier organe de détente, un échangeur de chaleur extérieur et un deuxième échangeur de chaleur, apte à déshumidifier et/ou refroidir le flux d'air destiné à être distribué dans l'habitacle. La boucle de climatisation comporte un dispositif de stockage relié à la sortie du premier échangeur de chaleur, de manière à pouvoir stocker les calories issues du premier échangeur de chaleur dans le dispositif de stockage avec un rendement maximum, et relié à la sortie de l'échangeur de chaleur extérieur, de manière à redistribuer les calories par l'intermédiaire du fluide réfrigérant dans le deuxième échangeur de chaleur afin de le dégivrer et/ou restituer l'énergie stockée.

Ainsi, un dégivrage ou une limitation du givrage de l'échangeur de chaleur extérieur et/ou du deuxième échangeur de chaleur est possible grâce au dispositif de stockage. En effet, le maintien de la température du dispositif de stockage est opéré par la boucle de climatisation tout en assurant qu'une performance énergétique soit à son maximum. Par suite, on utilise les calories stockées pour dégivrer l'échangeur de chaleur extérieur et/ou deuxième échangeur de chaleur en limitant la baisse de performance de la boucle de climatisation.

Selon un exemple de réalisation, la boucle de climatisation comporte une première branche de contournement disposée en parallèle du premier organe de détente.

Avantageusement, la boucle de climatisation comporte un premier moyen de commutation disposé à la sortie du premier échangeur de chaleur, de manière à commander la circulation du fluide réfrigérant à travers le dispositif de stockage. Préférentiellement, le premier moyen de commutation est une première vanne « trois voies » ou un premier échangeur de chaleur intermédiaire fluide caloporteur/fluide réfrigérant.

Alternativement ou en complément, la boucle de climatisation comporte un deuxième moyen de commutation disposé à la sortie de l'échangeur de chaleur extérieur, de manière à commander la circulation du fluide réfrigérant à travers le dispositif de stockage ou dans une branche de contournement du dispositif de stockage, dite deuxième branche de contournement, notamment lorsque l'usage du dispositif de stockage n'est pas souhaité afin de favoriser la restitution de l'énergie ou le refroidissement supplémentaire du fluide réfrigérant en sortie de l'échangeur de chaleur extérieur fonctionnant en tant que condenseur.

Préférentiellement, le deuxième moyen de commutation est une seconde vanne « trois voies » ou un deuxième échangeur de chaleur intermédiaire fluide caloporteur/fluide réfrigérant. De façon particulièrement avantageuse, la deuxième branche de contournement du dispositif de stockage est connectée à la seconde vanne « trois voies ».

Par ailleurs, le deuxième échangeur de chaleur intermédiaire fluide caloporteur/fluide réfrigérant est disposé à la sortie de l'échangeur de chaleur extérieur, de manière à permettre une gestion du stockage et/ou une restitution d'énergie du coté des hautes pressions et/ou un refroidissement supplémentaire du coté des basses pressions.

Selon d'autres modes de réalisation, la boucle de climatisation comporte un deuxième organe de détente. En particulier, le deuxième organe de détente est contrôlé de sorte que la pression du fluide réfrigérant en sortie du deuxième organe de détente soit supérieure à la pression de saturation du flux d'air destiné à être distribué dans l'habitacle traversant le deuxième échangeur de chaleur pour éviter le givrage du flux d'air destiné à être distribué dans l'habitacle.

Préférentiellement, la boucle de climatisation comporte une troisième branche de contournement disposée en parallèle du deuxième organe de détente et/ou du deuxième échangeur de chaleur.

Selon diverses configurations, le premier moyen de commutation et le deuxième moyen de commutation sont configurés de sorte que le fluide réfrigérant provenant du compresseur traverse, successivement,
- le premier échangeur de chaleur, la première conduite de dérivation, le dispositif de stockage thermique, la première conduite de retour, le premier organe de détente, l'échangeur de chaleur extérieur, la deuxième branche de contournement et la troisième branche de contournement, ou
- le premier échangeur de chaleur, le premier organe de détente, l'échangeur de chaleur extérieur, le dispositif de stockage et la troisième branche de contournement, ou
- le premier échangeur de chaleur, la première branche de contournement, l'échangeur de chaleur extérieur, le dispositif de stockage, le deuxième organe de détente et le deuxième échangeur de chaleur, ou
- le premier échangeur de chaleur, la première conduite de dérivation, le dispositif de stockage thermique, la première conduite de retour, le premier organe de détente, l'échangeur de chaleur extérieur, la deuxième branche de contournement, le deuxième organe de détente et le deuxième échangeur de chaleur.

Préférentiellement, le dispositif de stockage contient un matériau à changement de phase présentant une température de changement de phase comprise entre 5 °C et 20 °C, en particulier entre 10 °C et 15 °C.

D'autres caractéristiques et avantages de la présente invention apparaîtront encore à la lecture de la description détaillée qui suit comprenant des exemples de réalisation donnés à titre illustratif non limitatifs en référence aux figures annexées, qui pourront servir à compléter la compréhension de la présente invention et l'exposé de sa réalisation, et, le cas échéant, contribuer à sa définition dans lesquelles :
- la figure 1 représente une vue schématique de la boucle de climatisation selon un premier mode de fonctionnement, dit « mode chauffage - stockage », dans lequel l'habitacle est chauffé et l'énergie stockée dans le dispositif de stockage est entretenue,
- la figure 2 représente une vue schématique de la boucle de climatisation selon un second mode de fonctionnement, dit « premier mode chauffage - dégivrage », dans lequel l'habitacle est chauffé et l'échangeur de chaleur extérieur est dégivré avec mise à profit du dispositif de stockage du côté des basses pressions de la boucle thermodynamique,
- la figure 3 représente une vue schématique de la boucle de climatisation selon un troisième mode de fonctionnement, dit « deuxième mode chauffage - dégivrage », dans lequel l'habitacle est chauffé et l'échangeur de chaleur extérieur dégivré avec mise à profit du dispositif de stockage du côté des hautes pressions de la boucle thermodynamique,
- la figure 4 représente une vue schématique de la boucle de climatisation selon un quatrième mode de fonctionnement, dit « mode désembuage - dégivrage », dans lequel l'habitacle est désembué et/ou la formation du givre sur l'échangeur de chaleur extérieur est limitée en utilisant le dispositif de stockage,
- la figure 5 représente une vue schématique de la boucle de climatisation selon un cinquième mode, dit « mode refroidissement », dans lequel l'habitacle est refroidi en mettant à profit le dispositif de stockage, et
- la figure 6 représente une vue schématique de la boucle de climatisation selon un mode de réalisation alternative de l'invention comprenant un circuit sur l'eau.

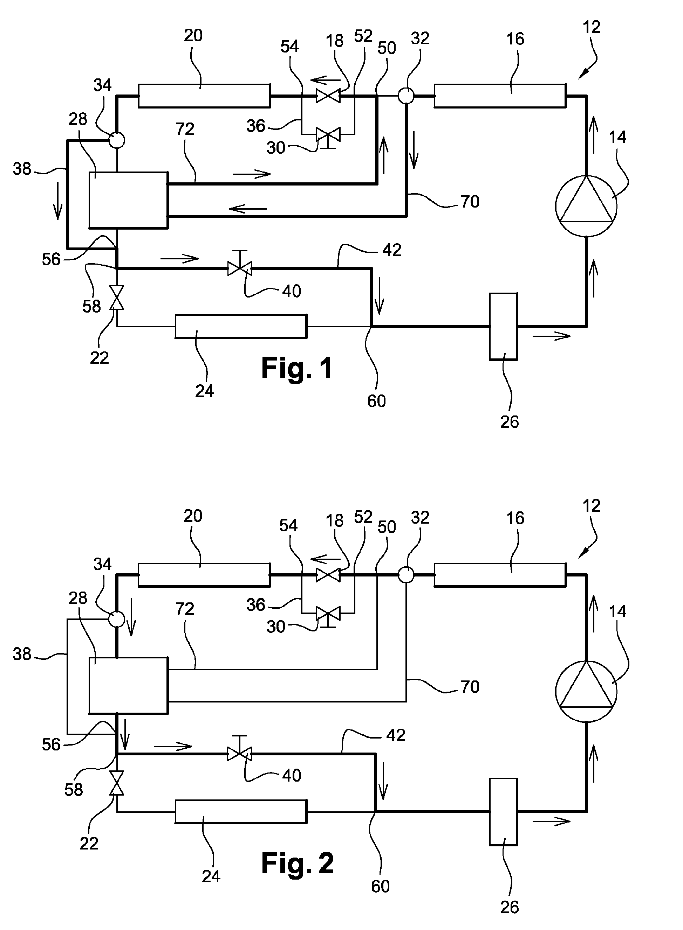

La figure 1 représente de manière schématisée une boucle de climatisation 12 selon l'invention pour une installation de chauffage, ventilation et/ou climatisation.

La boucle de climatisation 12 permet la circulation d'un fluide réfrigérant, notamment un fluide sous critique, tel que du R134A ou analogue, ou un fluide super critique, tel que du R744 ou dioxyde de carbone.

La boucle de climatisation 12 comprend, notamment, dans le sens de circulation en circuit fermé du fluide réfrigérant, un compresseur 14, apte à assurer une circulation du fluide réfrigérant à l'intérieur de la boucle de climatisation 12, un premier échangeur de chaleur 16, fonctionnant en tant que condenseur 16 et apte à réchauffer un flux d'air destiné à être distribué dans l'habitacle, un premier organe de détente 18, tel que, par exemple, un détendeur électronique ou un détendeur thermostatique, un échangeur de chaleur extérieur 20, un deuxième organe de détente 22, un deuxième échangeur de chaleur 24, fonctionnant en tant qu'évaporateur 24 et apte à déshumidifier et/ou refroidir le flux d'air destiné à être distribué dans l'habitacle, et un accumulateur 26. En sortie, l'accumulateur 26 est relié à l'entrée du compresseur 14.

Le premier échangeur de chaleur 16 et le deuxième échangeur de chaleur 24 sont placés dans une conduite de circulation du flux d'air, non représentée, débouchant en différentes zones de l'habitacle. Le premier échangeur de chaleur 16 et le deuxième échangeur de chaleur 24 sont aptes à réchauffer et/ou à refroidir le flux d'air débouchant dans l'habitacle, notamment dans une zone agencée pour le désembuage du pare-brise, une zone d'aération centrale et une zone pour les pieds.

Ainsi, le flux d'air apte à être distribué dans l'habitacle traverse, alternativement ou consécutivement, le premier échangeur de chaleur 16 et/ou le deuxième échangeur de chaleur 24. En particulier, selon un exemple particulier de réalisation, un volet de mixage est agencé dans la conduite de circulation afin de permettre une répartition du flux d'air entre le premier échangeur de chaleur 16 et le deuxième échangeur de chaleur 24. Avantageusement, le deuxième échangeur de chaleur 24 est disposé en amont du premier échangeur de chaleur 16, selon le sens de circulation du flux d'air dans la conduite de circulation. Préférentiellement, la totalité du flux d'air traverse le deuxième échangeur de chaleur 24 avant de traverser et/ou contourner le premier échangeur de chaleur 16.

Avantageusement, selon l'invention, un dispositif de stockage thermique 28 est intégré dans la boucle de climatisation 12 selon la présente invention de manière à stocker les calories transportées par le fluide réfrigérant pour ensuite les utiliser selon les modes de fonctionnement du dispositif.

Selon un agencement préférentiel, le dispositif de stockage thermique 28 est agencé entre l'échangeur de chaleur extérieur 20 et le deuxième organe de détente 22.

La boucle de climatisation 12 comporte également un premier moyen de commutation 32, notamment réalisé sous la forme d'une première vanne « trois voies » 32, en particulier une première électrovanne 32, disposée à la sortie du premier échangeur de chaleur 16. La première vanne « trois voies » 32 est reliée, via une première conduite de dérivation 70, à une première entrée du dispositif de stockage thermique 28. Une première sortie du dispositif de stockage thermique 28 est reliée, via une première conduite de retour 72, à la boucle de climatisation, en aval de la première vanne « trois voies » 32, en un premier point de connexion 50. Un tel agencement permet de commander le stockage de calories issues de l'échangeur de chaleur 16 vers le dispositif de stockage 28.

La boucle de climatisation 12 comporte une première branche de contournement 36, disposée en parallèle du premier organe de détente 18. La première branche de contournement 36 est agencée entre, d'une part, une deuxième point de connexion 52, avantageusement disposé en aval du premier point de connexion 50, et, d'autre part, une troisième du point de connexion 54, disposé en aval du premier organe de détente 18.

Préférentiellement, la première voie de contournement 36 comporte une première vanne de contrôle 30, apte à pendre une position d'ouverture ou une position de fermeture permettant respectivement d'autoriser ou d'interdire la circulation du fluide réfrigérant dans la première voie de contournement 36.

La boucle de climatisation 12 comporte également un deuxième moyen de commutation 34, notamment une deuxième vanne « trois voies » 34, en particulier une deuxième électrovanne 34, disposée à la sortie de l'échangeur de chaleur extérieur 20. La deuxième vanne « trois voies » 34 est reliée, respectivement, à une deuxième branche de contournement 38 et à une deuxième entrée du dispositif de stockage thermique 28.

La deuxième branche de contournement 38 est agencée entre, d'une part, la deuxième vanne « trois voies » 34 et un quatrième du point de connexion 56, disposé en aval du dispositif de stockage thermique 28.

La circulation du fluide réfrigérant dans la deuxième branche de contournement 38, contournant le dispositif de stockage 28, ou dans le dispositif de stockage 28 est commandée par la deuxième vanne « trois voies » 34 disposée à la sortie de l'échangeur de chaleur extérieur 20.

Ainsi, selon la présente invention, le dispositif de stockage thermique 28 est monté à la fois :
- en sortie du premier échangeur de chaleur 16, afin de stocker les calories issues et/ou résiduelles du premier échangeur de chaleur 16 dans le dispositif de stockage 28, avec un rendement maximum, et
- en sortie l'échangeur de chaleur extérieur 20, afin de redistribuer les calories par l'intermédiaire du fluide réfrigérant.

Selon l'invention, le dispositif de stockage 28 peut être constitué par un réservoir de fluide de stockage emmagasinant les calories en travaillant en chaleur sensible, ou par un matériau de stockage à changement de phase stockant les calories en travaillant en chaleur latente.

Avantageusement, le dispositif de stockage thermique 28 est un échangeur de chaleur bi-fluide permettant un échange de chaleur entre le fluide réfrigérant et le fluide/matériau de stockage.

Un tel dispositif de stockage 28 permet de diminuer la masse nécessaire et de limiter les variations de température du stockage. Le matériau de changement de phase présente, selon les besoins de l'invention, une température de changement de phase comprise entre 5°C et 25°C, en particulier entre 5°C et 20°C, préférentiellement entre 10°C et 20°C et notamment entre 10°C et 15°C.

Ainsi, selon les différentes configurations envisageables de la boucle de climatisation 12 propres aux divers modes de fonctionnement selon les figures de la présente invention, le dispositif de stockage 28 est apte à stocker des calories transportées par le fluide réfrigérant depuis le premier échangeur de chaleur 16 et/ou depuis l'échangeur de chaleur extérieur 20. En conséquence, le dispositif de stockage 28 constitue donc un stockeur de chaud et/ou de froid.

Dans la présente description, le terme 'calorie' englobe tous types de chaleur apte à être transportées, notamment, par un fluide réfrigérant, un fluide caloporteur, un flux d'air, ... Ainsi, le dispositif de stockage 28 peut stocker du froid ou du chaud en fonction de l'énergie emmagasinée par le fluide réfrigérant, le fluide caloporteur ou le flux d'air et en fonction de l'état de stockage du dispositif de stockage 28.

Enfin, la boucle de climatisation 12 comporte une troisième branche de contournement 42, disposée en parallèle du deuxième organe de détente 22 et du deuxième échangeur de chaleur 24. La troisième branche de contournement 42 est agencée entre, d'une part, un cinquième point de connexion 58, disposé en aval du deuxième organe de détente 22, et, d'autre part, une sixième du point de connexion 60, disposé en aval du deuxième échangeur de chaleur 24. Avantageusement, le sixième du point de connexion 60 est disposé en amont de l'accumulateur 26.

Préférentiellement, la troisième voie de contournement 42 comporte une deuxième vanne de contrôle 40, apte à pendre une position d'ouverture ou une position de fermeture permettant respectivement d'autoriser ou d'interdire la circulation du fluide réfrigérant dans la troisième voie de contournement 42.

Dans les diverses configurations de la boucle de climatisation 12, de façon privilégiée, le premier organe de détente 18 et le deuxième organe de détente 22 sont aptes à prendre des positions de fermeture lorsque, respectivement, la première vanne de contrôle 30 et la deuxième vanne de contrôle 40 sont en position d'ouverture.

Un telle boucle de climatisation 12 permet ainsi de proposer différents modes de fonctionnement selon les besoins de l'utilisateur et ainsi d'en améliorer le confort.

La figure 1 représente une vue schématique du dispositif selon la présente invention dans un premier mode de fonctionnement, dit « mode chauffage - stockage », dans lequel l'habitacle est chauffé et l'énergie stockée dans le dispositif de stockage 28 est entretenue.

En référence au schéma de la figure 1 illustrant le premier mode de fonctionnement, la première vanne « trois voies » 32 est commandée de sorte à permettre la circulation du fluide réfrigérant dans le dispositif de stockage 28 et la deuxième vanne « trois voies » 34 est commandée de sorte à permettre la circulation du fluide réfrigérant dans la deuxième branche de contournement 38, contournant ainsi le dispositif de stockage 28.

La première vanne de contrôle 30 est en position fermée afin d'interdire la circulation du fluide réfrigérant dans la première branche de contournement 36, le fluide réfrigérant circulant dans le premier organe de détente 18.

La deuxième vanne de contrôle 40 est en position ouverte afin de permettre la circulation du fluide réfrigérant dans la troisième branche de contournement 42, contournant ainsi le deuxième organe de détente 22 et le deuxième échangeur de chaleur 24.

Ainsi, dans le premier mode de fonctionnement, dit « mode chauffage - stockage », le fluide réfrigérant provenant du compresseur 14 traverse, successivement, le premier échangeur de chaleur 16, la première vanne « trois voies » 32, la première conduite de dérivation 70, le dispositif de stockage thermique 28, la première conduite de retour 72, le premier organe de détente 18, l'échangeur de chaleur extérieur 20, la deuxième vanne « trois voies » 34, la deuxième branche de contournement 38, la troisième branche de contournement 42 et l'accumulateur 26 avant de regagner le compresseur 14.

Dans la configuration du premier mode de fonctionnement selon la figure 1, l'échangeur de chaleur extérieur 20 fonctionne en tant qu'évaporateur 20.

Le fluide réfrigérant se condense dans le premier échangeur de chaleur 16 en échangeant de la chaleur avec le flux d'air le traversant. Ainsi, le flux d'air canalisé par la conduite de circulation est réchauffé à la traversée du premier échangeur de chaleur 16 avant d'être distribué dans l'habitacle.

Par suite, le fluide réfrigérant est détendu dans le premier organe de détente 18 avant d'être évaporé dans l'échangeur de chaleur extérieur 20, opérant dans cette configuration en tant qu'évaporateur 20. A cet effet, l'échangeur de chaleur extérieur 20 est traversé par un flux d'air extérieur échangeant des calories avec le fluide réfrigérant, qui est refroidi dans l'agencement de la figure 1. Le flux d'air extérieur n'est pas destiné à être distribué dans l'habitacle du véhicule.

Dans la configuration de la figure 1, le deuxième échangeur de chaleur 24 n'est pas opérant. En conséquence, le flux d'air apte à être distribué dans l'habitacle et canalisé par la conduite de circulation est uniquement réchauffé par le premier échangeur de chaleur 16.

Avant le démarrage du premier mode de fonctionnement, la température du fluide réfrigérant contenu dans le dispositif de stockage 28 est proche de la température extérieure. Dans ce mode de fonctionnement, le fluide réfrigérant traverse la deuxième branche de contournement 38 par commande de la deuxième vanne « trois voies » 34. En effet, dans le premier mode de fonctionnement, il n'est pas souhaité que le dispositif de stockage 28 soit utilisé pour restituer des calories stockées. Le premier mode de fonctionnement permet simplement d'entretenir le stockage de calories qu'il contient.

Selon l'agencement de la boucle de climatisation de la figure 1, en sortie du premier échangeur de chaleur 16, le fluide réfrigérant circule dans le dispositif de stockage 28 où il est refroidi. Comme précisé précédemment, la température du fluide réfrigérant contenu initialement dans le dispositif de stockage de stockage 28 est proche de la température extérieure, inférieure à la température du fluide réfrigérant à la sortie du premier échangeur de chaleur 16.

Ainsi, dans la configuration du premier mode de fonctionnement selon la figure 1, le dispositif de stockage 28 collecte des calories transportées par le fluide réfrigérant depuis le premier échangeur de chaleur 16. En conséquence, le dispositif de stockage 28 constitue donc un stockeur de chaud.

Avantageusement selon l'invention, pendant le premier mode de fonctionnement, dit « mode chauffage - stockage », le dispositif de stockage 28 accumule de l'énergie sous forme de calories.

De plus, le dispositif de stockage 28 contribue à améliorer le coefficient de performance du cycle en diminuant la température à la sortie du premier échangeur de chaleur 16. L'augmentation du coefficient de performance permet ainsi de stocker de l'énergie au moindre coût en ce qui concerne la puissance absorbée par le compresseur 14.

Dans la configuration selon le premier mode de fonctionnement, il est donc réalisé un stockage de l'énergie dans le dispositif de stockage 28 avec un coefficient de performance amélioré du cycle de la boucle de climatisation 12.

Selon l'invention encore, les calories stockées dans le dispositif de stockage 28 s'opèrent, de préférence, à une température moyenne comprise entre 5°C et 20°C, préférentiellement entre 10°C et 15°C.

La figure 2 représente une vue schématique du dispositif selon la présente invention dans un second mode de fonctionnement, dit « premier mode chauffage - dégivrage », dans lequel l'habitacle est chauffé et l'échangeur de chaleur extérieur 20 est dégivré avec mise à profit du dispositif de stockage 28 du côté des basses pressions de la boucle de climatisation 12 et restitution de l'énergie stockée.

En référence au schéma de la figure 2 illustrant le deuxième mode de fonctionnement, la première vanne « trois voies » 32 est commandée de sorte à permettre la mise en communication directe de la sortie du premier échangeur de chaleur 16 avec l'entrée du premier organe de détente 18, la circulation du fluide réfrigérant n'étant pas permise dans le dispositif de stockage 28, et la deuxième vanne « trois voies » 34 est commandée de sorte à permettre la circulation directe du fluide réfrigérant à travers le dispositif de stockage 28.

La première vanne de contrôle 30 est en position fermée afin d'interdire la circulation du fluide réfrigérant dans la première branche de contournement 36, le fluide réfrigérant circulant dans le premier organe de détente 18.

La deuxième vanne de contrôle 40 est en position ouverte afin de permettre la circulation du fluide réfrigérant dans la troisième branche de contournement 42, contournant ainsi le deuxième organe de détente 22 et le deuxième échangeur de chaleur 24.

Ainsi, dans le deuxième mode de fonctionnement, dit « premier mode chauffage - dégivrage », le fluide réfrigérant provenant du compresseur 14 traverse successivement le premier échangeur de chaleur 16, la première vanne « trois voies » 32, le premier organe de détente 18, l'échangeur de chaleur extérieur 20, la deuxième vanne « trois voies » 34, le dispositif de stockage 28, la troisième branche de contournement 42 et l'accumulateur 26 avant de regagner le compresseur 14.

Dans la configuration du deuxième mode de fonctionnement selon la figure 2, l'échangeur de chaleur extérieur 20 fonctionne en tant qu'évaporateur 20.

Selon le second mode de fonctionnement illustré sur la figure 2, un dégivrage des surfaces extérieures de l'échangeur de chaleur extérieur 20 peut être opéré à basses pressions.

Le fluide réfrigérant se condense dans le premier échangeur de chaleur 16 en échangeant de la chaleur avec le flux d'air le traversant. Ainsi, le flux d'air canalisé par la conduite de circulation est réchauffé à la traversée du premier échangeur de chaleur 16 avant d'être distribué dans l'habitacle.

De sorte à réchauffer l'habitacle et à dégivrer en même temps l'échangeur de chaleur extérieur 20, le fluide réfrigérant s'évapore partiellement dans l'échangeur de chaleur extérieur 20, à une pression imposée par le dispositif de stockage 28, permettant ainsi de dégivrer ou de limiter le givrage de l'échangeur de chaleur extérieur 20. Le dispositif de stockage 28 agit donc, dans cette configuration, comme une charge thermique, assurant une fonction de « levier thermique » du coté des basses pressions. La chaleur amenée par le dispositif de stockage 28 compense le refroidissement du fluide réfrigérant de telle sorte que la puissance de dégivrage parvient essentiellement du dispositif de stockage 28.

L'énergie stockée sous forme de calories dans le dispositif de stockage 28 peut ainsi être utilisée du côté des basses pressions de la boucle de climatisation 12 afin d'achever l'évaporation du fluide réfrigérant quittant l'échangeur chaleur extérieur 20, qui est dégivré.

Ainsi, le dispositif de stockage 28 contribue au dégivrage de l'échangeur chaleur extérieur 20 sans altérer l'efficacité de la boucle de climatisation 12, qui est l'objectif recherché par la présente invention.

De plus, selon l'état de stockage du dispositif de stockage 28, dans la configuration du deuxième mode de fonctionnement selon la figure 2, le dispositif de stockage 28 peut également collecter des calories transportées par le fluide réfrigérant depuis l'échangeur de chaleur extérieur 20. En conséquence, alternativement, le dispositif de stockage 28 constitue donc un stockeur de froid.

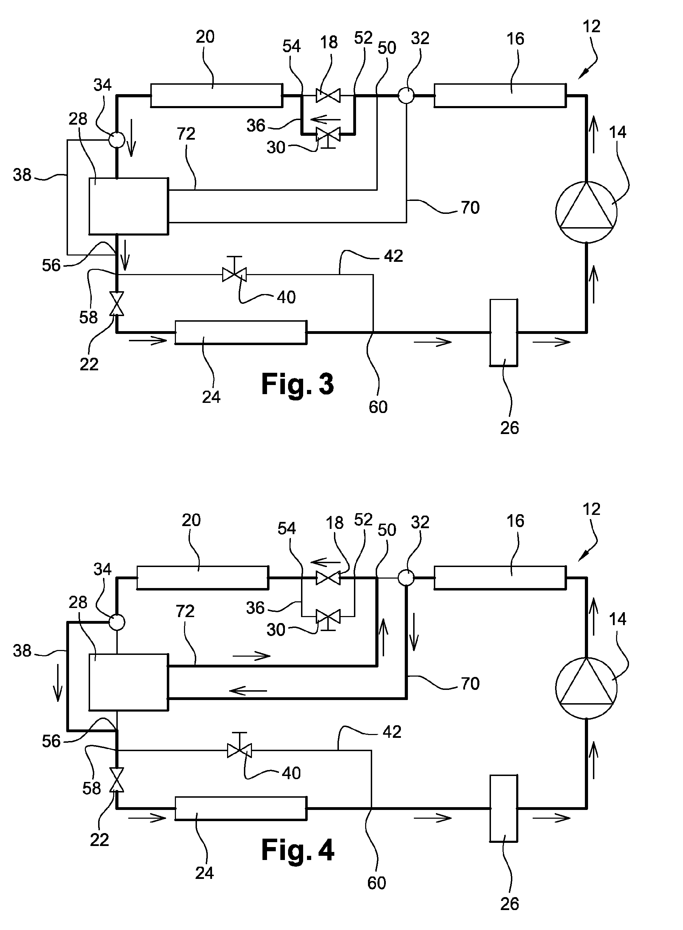

La figure 3 représente une vue schématique du dispositif selon la présente invention dans un troisième mode de fonctionnement, dit « deuxième mode chauffage - dégivrage », dans lequel l'habitacle est chauffé et l'échangeur de chaleur extérieur dégivré avec mise à profit du dispositif de stockage 28 du côté des hautes pressions de la boucle de climatisation 12 et restitution de l'énergie stockée.

En référence au schéma de la figure 3 illustrant le troisième mode de fonctionnement, la première vanne « trois voies » 32 est commandée de sorte à permettre la mise en communication directe de la sortie du premier échangeur de chaleur 16 avec l'entrée du premier organe de détente 18, la circulation du fluide réfrigérant n'étant pas permise dans le dispositif de stockage 28, et la deuxième vanne « trois voies » 34 est commandée de sorte à permettre la circulation directe du fluide réfrigérant à travers le dispositif de stockage 28.

La première vanne de contrôle 30 est en position ouverte afin de permettre la circulation du fluide réfrigérant dans la première branche de contournement 36, le fluide réfrigérant contournant le premier organe de détente 18.

La deuxième vanne de contrôle 40 est en position fermée afin d'interdire la circulation du fluide réfrigérant dans la troisième branche de contournement 42, le fluide réfrigérant circulant successivement dans le deuxième organe de détente 22 et dans le deuxième échangeur de chaleur 24.

Ainsi, dans le troisième mode de fonctionnement, dit « deuxième mode chauffage - dégivrage », le fluide réfrigérant provenant du compresseur 14 traverse successivement le premier échangeur de chaleur 16, la première vanne « trois voies » 32, la première branche de contournement 36, l'échangeur de chaleur extérieur 20, la deuxième vanne « trois voies » 34, le dispositif de stockage 28, le deuxième organe de détente 22, le deuxième échangeur de chaleur 24 et l'accumulateur 26 avant de regagner le compresseur 14.

Le fluide réfrigérant se condense dans le premier échangeur de chaleur 16 en échangeant de la chaleur avec le flux d'air le traversant. Ainsi, le flux d'air canalisé par la conduite de circulation est réchauffé à la traversée du premier échangeur de chaleur 16 avant d'être distribué dans l'habitacle.

Dans la configuration du troisième mode de fonctionnement selon la figure 3, l'échangeur de chaleur extérieur 20 fonctionne en tant que condenseur 20.

Selon le troisième mode de fonctionnement de la boucle de climatisation 12 illustré sur la figure 3, un dégivrage des surfaces extérieures de l'échangeur de chaleur extérieur 20 peut aussi être opéré à hautes pressions.

Le fluide réfrigérant se condense dans le premier échangeur de chaleur 16 en échangeant de la chaleur avec le flux d'air le traversant. Ainsi, le flux d'air canalisé par la conduite de circulation est réchauffé à la traversée du premier échangeur de chaleur 16 avant d'être distribué dans l'habitacle.

Par suite, le fluide réfrigérant traverse l'échangeur de chaleur extérieur 20 en échangeant des calories avec le flux d'air traversant l'échangeur de chaleur extérieur 20.

Dans l'hypothèse où le fluide réfrigérant n'a pas été complètement condensé dans le premier échangeur de chaleur 16, le fluide réfrigérant continue de se condenser dans l'échangeur de chaleur extérieur 20 permettant ainsi de dégivrer l'échangeur de chaleur extérieur 20.

De plus, selon la configuration de la figure 3, le fluide réfrigérant en sortie du premier échangeur de chaleur 16 est à haute température et à haute pression. En contournant le premier organe de détente 18, l'état du fluide réfrigérant n'est sensiblement pas modifié. En conséquence, l'échangeur de chaleur extérieur 20 est traversé par le fluide réfrigérant à haute température et à haute pression contribuant également, de façon complémentaire ou alternative, à dégivrer l'échangeur de chaleur extérieur 20.

En sortie de l'échangeur de chaleur extérieur 20, la deuxième vanne « trois voies » 34 est agencée de sorte à permettre la circulation directe du fluide réfrigérant à travers le dispositif de stockage 28. Le fluide réfrigérant récupère donc de l'énergie lors de la traversée du dispositif de stockage 28 préalablement à la détente opérée par le deuxième organe de détente 22.

Selon les états de stockage précédents considérés, le dispositif de stockage 28 peut alternativement stocker du chaud ou du froid. En conséquence, le fluide réfrigérant est refroidi ou réchauffé à la traversée du dispositif de stockage 28 préalablement à la détente opérée par le deuxième organe de détente 22.

Préférentiellement, au cours de la traversée du deuxième organe de détente 22, la pression et la température du fluide réfrigérant vont chuter avant de traverser le deuxième échangeur de chaleur 24 dans lequel, le fluide réfrigérant se vaporise en absorbant la chaleur du flux d'air qui le traverse pour produire ainsi le flux d'air refroidi.

L'énergie stockée sous forme de calories dans le dispositif de stockage 28 peut ainsi être utilisée du côté des hautes pressions de la boucle de climatisation 12. Le dispositif de stockage 28 permet donc un échange de chaleur entre le fluide réfrigérant et le fluide/matériau de stockage. Le fluide réfrigérant se trouve, alors, en sortie du dispositif de stockage 28 dans un état particulier de pression et de température avant de traverser le deuxième organe de détente 22 dans lequel la détente du fluide réfrigérant est contrôlée de manière à ce qu'en sortie du deuxième organe de détente 22, la basse pression du fluide réfrigérant soit supérieure à la pression de saturation du flux d'air entrant dans le deuxième échangeur de chaleur 24. Ceci permet de pouvoir dégivrer ou d'éviter de givrer le deuxième échangeur de chaleur 24 sans altérer l'efficacité de la boucle de climatisation 12.

Selon cet agencement, il est avantageux que le côté des hautes pressions de la boucle de climatisation 12 fournisse une quantité minime de chaleur afin de chauffer le flux d'air propre à être distribué dans l'habitacle. Un organe de chauffage additionnel, notamment du type électrique, peut être agencé en amont du premier échangeur de chaleur 16, selon le sens de circulation du flux d'air dans la conduite de circulation, afin de réchauffer, en tout ou partie, le flux d'air à la température désirée.

La figure 4 représente une vue schématique du dispositif selon la présente invention dans un quatrième mode de fonctionnement, dit « mode désembuage - dégivrage », dans lequel l'habitacle est désembué et/ou la formation du givre sur l'échangeur de chaleur extérieur 20 est limitée en utilisant le dispositif de stockage 28.

En référence au schéma de la figure 4 illustrant le quatrième mode de fonctionnement, la première vanne « trois voies » 32 est commandée de sorte à permettre la circulation du fluide réfrigérant dans le dispositif de stockage 28 et la deuxième vanne « trois voies » 34 est commandée de sorte à permettre la circulation du fluide réfrigérant dans la deuxième branche de contournement 38, contournant ainsi le dispositif de stockage 28.

La première vanne de contrôle 30 est en position fermée afin d'interdire la circulation du fluide réfrigérant dans la première branche de contournement 36, le fluide réfrigérant circulant dans le premier organe de détente 18.

La deuxième vanne de contrôle 40 est en position fermée afin d'interdire la circulation du fluide réfrigérant dans la troisième branche de contournement 42, le fluide réfrigérant circulant successivement dans le deuxième organe de détente 22 et dans le deuxième échangeur de chaleur 24.

Ainsi, dans le quatrième mode de fonctionnement, dit « mode désembuage - dégivrage », le fluide réfrigérant provenant du compresseur 14 traverse successivement le premier échangeur de chaleur 16, la première vanne « trois voies » 32, la première conduite de dérivation 70, le dispositif de stockage thermique 28, la première conduite de retour 72, le premier organe de détente 18, l'échangeur de chaleur extérieur 20, la deuxième vanne « trois voies » 34, la deuxième branche de contournement 38, le deuxième organe de détente 22, le deuxième échangeur de chaleur 24 et l'accumulateur 26 avant de regagner le compresseur 14.

Dans la configuration du quatrième mode de fonctionnement selon la figure 4, l'échangeur de chaleur extérieur 20 fonctionne en tant qu'évaporateur 20.

Afin de désembuer les vitres de l'habitacle et/ou de limiter la formation de givre dans l'échangeur de chaleur extérieur 20 selon la figure 4, le fluide réfrigérant se vaporise dans l'échangeur de chaleur extérieur 20 en absorbant la chaleur du flux d'air qui traverse l'échangeur de chaleur extérieur 20.

Le fluide traverse ensuite la voie by-pass 38 par commande de la deuxième vanne « trois voies » 34, car, dans ce mode de fonctionnement, il n'est souhaité que soit utilisé le dispositif de stockage 28 mais simplement entretenir la chaleur stockée qu'il contient.

Le fluide circule ensuite successivement dans l'organe de détente 22 et l'évaporateur principal 24. Pour cela, la deuxième vanne de contrôle 40 est fermée, le deuxième organe de détente 22 étant ouvert de sorte que le fluide réfrigérant traverse le deuxième échangeur de chaleur 24. Au cours de la traversée du deuxième organe de détente 22, la pression et la température du fluide réfrigérant vont chuter avant de traverser le deuxième échangeur de chaleur 24 dans lequel, le fluide réfrigérant se vaporise en absorbant la chaleur du flux d'air qui le traverse pour produire ainsi le flux d'air refroidi.

Selon les états de stockage précédents considérés, le fluide réfrigérant peut traverser ou contourner le dispositif de stockage 28. Ainsi, le dispositif de stockage 28 constitue donc, selon les besoins et le type de stockage effectué, un accumulateur d'énergie ou une charge thermique, assurant une fonction de « levier thermique » du coté des basses pressions, telle que défini précédemment en relation avec la figure 1.

Lorsque le dispositif de stockage 28 est employé en tant charge thermique, assurant une fonction de « levier thermique » du coté des basses pressions, il est possible de définir une température positive d'évaporation dans l'échangeur de chaleur extérieur 20 afin de limiter les risques de givrage de l'échangeur de chaleur extérieur 20.

Dans ce mode de fonctionnement, le dispositif de stockage 28 se trouve avantageusement dans une plage de température comprise entre 10°C et 15°C.

Par ailleurs, selon la température du stockage d'énergie, le dispositif de stockage 28 peut être utilisé en tant qu'élément de refroidissement additionnel permettant d'améliorer le coefficient de performance de la boucle de climatisation 12.

En conséquence, la température du dispositif de stockage 28 permet de définir la configuration de la deuxième vanne « trois voies » 34 afin de définir si, au cours du cycle, le dispositif de stockage 28 est mis à profit pour optimiser le coefficient de performance de la boucle de climatisation 12 en assurant un stockage de calories. Ainsi, à titre d'exemple, si la température du stockage, dans le dispositif de stockage 28, est inférieure à une température de référence, par exemple 15°C, le fluide réfrigérant de la boucle de climatisation 12 va alimenter le dispositif de stockage 28 en calories jusqu'à atteindre la température de référence. Une fois la température de référence atteinte, la boucle de climatisation 12 utilisera l'énergie stockée du dispositif de stockage 28 pour optimiser le coefficient de performance de la boucle de climatisation 12 en décidant de restituer l'énergie stockée du coté des basses pressions comme lors de la restitution d'énergie pour assure la fonction de dégivrage.

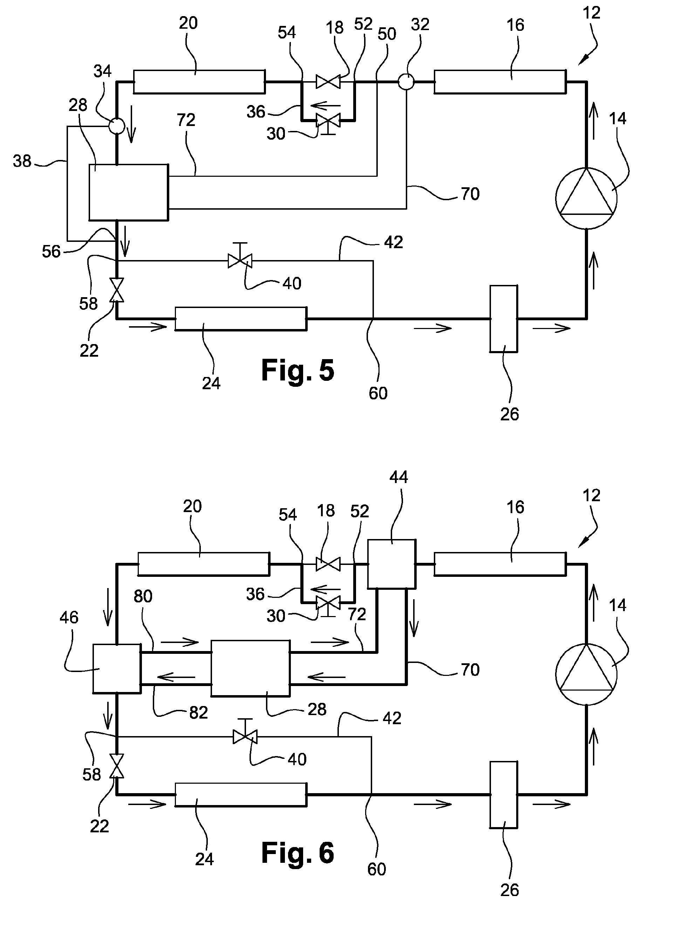

La figure 5 représente une vue schématique du dispositif selon la présente invention dans un cinquième mode, dit « mode refroidissement », dans lequel l'habitacle est refroidi en mettant à profit le dispositif de stockage 28.

En référence au schéma de la figure 5 illustrant le cinquième mode de fonctionnement, la première vanne « trois voies » 32 est commandée de sorte à permettre la mise en communication directe de la sortie du premier échangeur de chaleur 16 avec l'entrée du premier organe de détente 18, la circulation du fluide réfrigérant n'étant pas permise dans le dispositif de stockage 28, et la deuxième vanne « trois voies » 34 est commandée de sorte à permettre la circulation directe du fluide réfrigérant à travers le dispositif de stockage 28.

La première vanne de contrôle 30 est en position ouverte afin de permettre la circulation du fluide réfrigérant dans la première branche de contournement 36, le fluide réfrigérant contournant le premier organe de détente 18.

La deuxième vanne de contrôle 40 est en position fermée afin d'interdire la circulation du fluide réfrigérant dans la troisième branche de contournement 42, le fluide réfrigérant circulant successivement dans le deuxième organe de détente 22 et dans le deuxième échangeur de chaleur 24.

Ainsi, dans le cinquième mode de fonctionnement, dit « mode refroidissement », le fluide réfrigérant provenant du compresseur 14 traverse successivement le premier échangeur de chaleur 16, la première vanne « trois voies » 32, la première branche de contournement 36, l'échangeur de chaleur extérieur 20, la deuxième vanne « trois voies » 34, le dispositif de stockage 28, le deuxième organe de détente 22, le deuxième échangeur de chaleur 24 et l'accumulateur 26 avant de regagner le compresseur 14.

Dans la configuration du cinquième mode de fonctionnement selon la figure 5, l'échangeur de chaleur extérieur 20 fonctionne en tant que condenseur 20.

L'énergie stockée sous forme de calories dans le dispositif de stockage 28 peut ainsi être utilisée du côté des « hautes pressions » de la boucle de climatisation 12. L'énergie stockée dans le dispositif de stockage 28 est donc réchauffée par la « haute température » du fluide réfrigérant avant de traverser le deuxième organe de détente 22. Le fluide réfrigérant se trouve donc en sortie du dispositif de stockage 28 dans un état sous refroidit.

En conséquence, la température du dispositif de stockage 28 permet de définir la configuration de la deuxième vanne « trois voies » 34 afin de définir si, au cours du cycle, le dispositif de stockage 28 est mis à profit pour optimiser le coefficient de performance de la boucle de climatisation 12 en assurant un stockage en calories. Ainsi, à titre d'exemple, si la température du stockage dans le dispositif de stockage 28 est inférieure à une température de référence, par exemple 15°C comme cela peut être le cas au démarrage du véhicule, le fluide réfrigérant de la boucle de climatisation 12 est refroidi dans le dispositif de stockage 28 en cédant de la chaleur. Le dispositif de stockage 28 devient donc un refroidisseur additionnel jusqu'à atteindre la température de référence. Le coefficient de performance de la boucle de climatisation12 durant ce mode de fonctionnement est donc amélioré.

Selon l'invention, un second mode de réalisation de l'invention est envisageable et illustré sur la figure 6 présentant une vue schématique du dispositif selon un second mode de réalisation de l'invention comprenant un circuit sur l'eau dans une configuration analogue à celle de la figure 3.

Les autres modes de fonctionnement de ce second mode de réalisation peuvent être déduits des diverses configurations présentées aux figures 1 à 5 en relation avec le premier mode de réalisation.

Les première et deuxième moyens de commutation 32 et 34 sont respectivement remplacés par un premier échangeur de chaleur intermédiaire fluide caloporteur/fluide réfrigérant 44 et un second échangeur de chaleur intermédiaire fluide caloporteur/fluide réfrigérant 46, de manière à assurer le stockage de l'énergie dans le dispositif de stockage thermique 28.

Les premier et second échangeurs de chaleur de chaleur intermédiaire fluide caloporteur/fluide réfrigérant 44 et 46 forment, avec le dispositif de stockage thermique 28, un circuit fermé dans lequel circule un fluide caloporteur, notamment de l'eau, assurant le lien entre le dispositif de stockage thermique 28 et le côté des basses pressions et/ou le coté des hautes pressions de la boucle de climatisation 12 selon les modes de fonctionnement de la boucle de climatisation 12.

Les premier et second échangeurs de chaleur intermédiaire fluide caloporteur/fluide réfrigérant 44 et 46 sont donc des échangeurs de chaleur bi-fluide permettant un échange de chaleur entre le fluide réfrigérant et le fluide caloporteur.

Tel que présenté en figure 6, le dispositif de stockage thermique 28 est reliée au premier échangeur de chaleur intermédiaire fluide caloporteur/fluide réfrigérant 44 respectivement via une première conduite de dérivation 70 et une première conduite de retour 72. Par ailleurs, le dispositif de stockage thermique 28 est reliée au deuxième échangeur de chaleur intermédiaire fluide caloporteur/fluide réfrigérant 46 respectivement via une deuxième conduite de dérivation 80 et une deuxième conduite de retour 82.

L'agencement selon la figure 6 est tel que le dispositif de stockage thermique 28 n'est pas traversé par le fluide réfrigérant. Toutefois, selon une alternative de réalisation non représentée, le dispositif de stockage thermique 28 peut être réalisé sous la forme d'un échangeur de chaleur tri-fluide entre le fluide réfrigérant, le fluide caloporteur et le fluide/matériau de stockage. Dans un tel cas, le dispositif de stockage thermique 28 tri-fluide peut être traversé par le fluide caloporteur et être agencé tel que défini sur les figures 1 à 5.

Pour l'ensemble de modes de réalisation décrits précédemment, il est également envisageable de concevoir un agencement particulier, non représenté, du deuxième organe de détente 22. En effet, le deuxième organe de détente 22 peut être conformé de façon analogue au premier organe de détente 18 et comporté une branche de contournement comprenant une vanne de contrôle dédiée.

En complément de cette alternative de réalisation, il est également possible que le cinquième point de connexion 58 soit agencé en aval du deuxième organe de détente 22 et du point de connexion de branche de contournement du deuxième organe de détente 22.

Il doit être bien entendu toutefois que ces exemples de fonctionnement sont donnés à titre d'illustration de l'objet de l'invention. Bien évidemment, l'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

De plus, les différents modes de fonctionnement décrits précédemment peuvent être pris séparément ou en combinaison afin de réaliser des alternatives de réalisations et diverses configuration d'une même boucle de climatisation selon un procédé de gestion thermique de la boucle de climatisation telle que définie selon la présente invention.

## Revendications

1. Boucle de climatisation (12) pour une installation de chauffage, ventilation et /ou climatisation, notamment d'un habitacle de véhicule automobile, comportant au moins, selon le sens de circulation en circuit fermé d'un fluide réfrigérant, un compresseur (14), un premier échangeur de chaleur (16), un premier organe de détente (18), un échangeur de chaleur extérieur (20) et un deuxième échangeur de chaleur (24),
**caractérisé en ce que** la boucle de climatisation (12) comporte un dispositif de stockage (28) relié à la sortie du premier échangeur de chaleur (16) et à la sortie de l'échangeur de chaleur extérieur (20).

2. Boucle de climatisation (12) selon la revendication 1, **caractérisé en ce que** la boucle de climatisation (12) comporte une première branche de contournement (36) disposée en parallèle du premier organe de détente (18).

3. Boucle de climatisation (12) selon la revendication 1 ou 2, **caractérisé en ce que** la boucle de climatisation (12) comporte un premier moyen de commutation (32) disposé à la sortie du premier échangeur de chaleur (16), de manière à commander la circulation du fluide réfrigérant à travers le dispositif de stockage (28).

4. Boucle de climatisation (12) selon la revendication 3, **caractérisé en ce que** le premier moyen de commutation (32) est agencé en amont, selon le sens de circulation en circuit fermé d'un fluide réfrigérant, du premier organe de détente (18).

5. Boucle de climatisation (12) selon l'une des revendications 3 à 4, **caractérisé en ce que** le premier moyen de commutation (32) est une première vanne « trois voies » (32).

6. Boucle de climatisation (12) selon l'une des revendications 3 à 4, **caractérisé en ce que** le premier moyen de commutation (32) est un premier échangeur de chaleur intermédiaire fluide caloporteur/fluide réfrigérant (44).

7. Boucle de climatisation (12) selon l'une des revendications 1 à 6, **caractérisé en ce que** la boucle de climatisation (12) comporte un deuxième moyen de commutation (34) disposé à la sortie de l'échangeur de chaleur extérieur (20), de manière à commander la circulation du fluide réfrigérant à travers le dispositif de stockage (28)

8. Boucle de climatisation (12) selon la revendication 7, **caractérisé en ce que** le deuxième moyen de commutation (34) est une seconde vanne « trois voies » (34).

9. Boucle de climatisation (12) selon la revendication 8, **caractérisé en ce que** la boucle de climatisation (12) comporte une deuxième branche de contournement (38) du dispositif de stockage (28) connectée à la seconde vanne « trois voies » (34).

10. Boucle de climatisation (12) selon la revendication 7, **caractérisé en ce que** le deuxième moyen de commutation (34) est un deuxième échangeur de chaleur intermédiaire fluide caloporteur/fluide réfrigérant (46).

11. Boucle de climatisation (12) selon l'un des revendications 1 à 10, **caractérisé en ce que** la boucle de climatisation (12) comporte un deuxième organe de détente (22).

12. Boucle de climatisation (12) selon la revendication 11, **caractérisé en ce que** la boucle de climatisation (12) comporte une troisième branche de contournement (42) disposée en parallèle du deuxième organe de détente (22) et/ou du deuxième échangeur de chaleur (24).

13. Boucle de climatisation (12) selon la revendication 11 ou 12, **caractérisé en ce que** le deuxième organe de détente (22) est contrôlé de sorte que la pression du fluide réfrigérant en sortie du deuxième organe de détente (22) soit supérieure à la pression de saturation du flux d'air destiné à être distribué dans l'habitacle traversant entrant dans le deuxième échangeur de chaleur (24).

14. Boucle de climatisation (12) selon la revendication 13, **caractérisé en ce que** le premier moyen de commutation (32) et le deuxième moyen de commutation (34) sont configurés de sorte que le fluide réfrigérant provenant du compresseur (14) traverse, successivement, le premier échangeur de chaleur (16), la première conduite de dérivation (70), le dispositif de stockage thermique (28), la première conduite de retour (72), le premier organe de détente (18), l'échangeur de chaleur extérieur (20), la deuxième branche de contournement (38) et la troisième branche de contournement (42).

15. Boucle de climatisation (12) selon la revendication 13, **caractérisé en ce que** le premier moyen de commutation (32) et le deuxième moyen de commutation (34) sont configurés de sorte que le fluide réfrigérant provenant du compresseur (14) traverse, successivement, le premier échangeur de chaleur (16), le premier organe de détente (18), l'échangeur de chaleur extérieur (20), le dispositif de stockage (28) et la troisième branche de contournement (42).

16. Boucle de climatisation (12) selon la revendication 13, **caractérisé en ce que** le premier moyen de commutation (32) et le deuxième moyen de commutation (34) sont configurés de sorte que le fluide réfrigérant provenant du compresseur (14) traverse, successivement, le premier échangeur de chaleur (16), la première branche de contournement (36), l'échangeur de chaleur extérieur (20), le dispositif de stockage (28), le deuxième organe de détente (22) et le deuxième échangeur de chaleur (24).

17. Boucle de climatisation (12) selon la revendication 13, **caractérisé en ce que** le premier moyen de commutation (32) et le deuxième moyen de commutation (34) sont configurés de sorte que le fluide réfrigérant provenant du compresseur (14) traverse, successivement, le premier échangeur de chaleur (16), la première conduite de dérivation (70), le dispositif de stockage thermique (28), la première conduite de retour (72), le premier organe de détente (18), l'échangeur de chaleur extérieur (20), la deuxième branche de contournement (38), le deuxième organe de détente (22) et le deuxième échangeur de chaleur (24).

18. Boucle de climatisation (12) selon l'une quelconque des revendications précédentes, **caractérisé en ce que** le dispositif de stockage (28) contient un matériau à changement de phase présentant une température de changement de phase comprise entre 5 °C et 20 °C, préférentiellement entre 10 °C et 15 °C.
